## Europäisches Patentamt
## European Patent Office
## Office européen des brevets

(19)

(11) Publication number: **0 001 830**
**B1**

(12) **EUROPEAN PATENT SPECIFICATION**

(45) Date of publication of patent specification: **20.01.82**

(21) Application number: **78101278.6**

(22) Date of filing: **02.11.78**

(51) Int. Cl.³: **C 08 K 5/14, C 08 K 5/02, C 08 L 25/06**

(54) Particles of expandable polystyrene with improved flame-retardant properties.

(30) Priority: **09.11.77 US 849904**

(43) Date of publication of application:
**16.05.79 Bulletin 79/10**

(45) Publication of the grant of the European patent:
**20.01.82 Bulletin 82/3**

(84) Designated Contracting States:
**BE DE FR GB NL**

(56) References cited:
**CH - A - 471 173**
**US - A - 3 819 547**

**Kunststoff-Handbuch, Band V,**
**S. 688—692, 1969**

(73) Proprietor: **BASF WYANDOTTE CORPORATION**
**1609 Biddle Avenue**
**Wyandotte Michigan 48192 (US)**

(72) Inventor: **Kienzle, Charles**
**87 Farm Road Circle**
**East Brunswick New Jersey 08814 (US)**
Inventor: **Gebura, Stanley Ernest**
**30 Laurel Wood Trail**
**Mountain Lakes New Jersey 07046 (US)**

(74) Representative: **von Günner, Kurt, Dr.**
**BASF Aktiengesellschaft Carl-Bosch-Strasse 38**
**D-6700 Ludwigshafen (DE)**

Courier Press, Leamington Spa, England.

Particles of expandable polystyrene with improved flame-retardant properties.

This invention relates to particles of expandable polystyrene containing hexabromocyclododecane in an amount effective to improve the flame retardant properties.

Fine-particled beads of expandable polystyrene are usually made by a process of suspension polymerization from, for the most part, monomeric material, although the making of such fine-particled beads by a practice involving a preliminary formation of the polymer beads and then a subsequent treatment of them with other ingredients to bring them to the desired composition is not to be ruled out. When the invention is practiced, relative advantages are obtained in the block-moulding process, and at the same time, a desirable product is made, one which presents a good appearance because of its desirable fine-grained structure, yet at the same time, because of the reduced "shrinkage" and "collapse" properties of beads made in accordance with the invention, blocks are made from which slabs or the like may be cut without encountering the relatively high proportion of scrap losses that usually attended the making of such blocks and slap pieces in the past, especially when a fine-grained product was desired.

The closest prior art is the practice generally employed in the making of similar products prior to the present invention, and in respect to the ingredients employed, that practice follows generally the lines indicated in US - A - 3,058,929. The above-mentioned patent discloses making beads of expandable polystyrene with the use of an organic bromide as an anti-flame agent and, as a synergist, a small amount of an organic peroxide of relatively stable nature, i.e., one defined as having a half-life of at least two hours as determined in benzene at 100°C. Where US - A - 3,058,929 uses an aliphatic or cyclohexyl bromide, other organic bromides, such as hexabromocyclododecane, can be used as indicated in US - A - 3,093,599. The hexabromocyclododecane is used at a level of about from 0.6—2.0 parts per hundred of resin, and in accordance with the practices before the present invention was made, there was used dicumyl peroxide at the rate of 0.1—2.0 part per hundred parts of resin as the relatively stable organic peroxide.

There has been, in connection with the usual practice of the prior art, a problem in connection with "shrinkage" and "collapse" of blocks molded from the anti-flame-modified expandable polystyrene beads. The term "shrinkage" refers to the decrease in longitudinal or vertical dimension exhibited by a molded block upon being unmolded and permitted to cool to room temperature, and the term "collapse" refers to the extent of in-bowing of a central portion of a side of such block. These blocks, which are usually thereafter intended to be cut into slab-like pieces 25 to 150mm thick and used as insulation boards or the like, are relatively large, being generally on the order of 50cm wide, 124cm high, and 490cm long. The percent of shrinkage can be determined by measuring the length of the product block at room temperature and comparing the dimension obtained with the known interior length dimension of the mold from which the block was produced. The percent of collapse can be determined by positioning a straightedge horizontally along one side of the block about halfway up its height and then measuring the distance between the straightedge and the in-bowed surface of the block, and repeating the same operation on the other side, then adding the two dimensions so obtained and comparing them with the nominal width of the block, as obtained from the known interior dimensions of the mold from which the block was produced.

The collapse and shrinkage problems are not noticed to any particular degree in the making of similar products from polystyrene compositions which have not been modified by the inclusion of organic bromide and peroxide synergist. As time goes on, however, the demand in the marketplace has increasingly been for the flame-retardant-modified material rather than the unmodified.

In the invention, there is used as a stable peroxide the compound 1,3-bis-($\alpha$-tert,-butyl-peroxydiisopropyl)-benzene. That compound is itself known, for example, from *Chemical Abstracts*, Vol. 61, column 4270f, which teaches that the compound can be used in the vulcanization of rubber and in other organic reactions. According to US - A - 3,819,547, among other peroxids, 1,3-bis-($\alpha$-tert.-butyl-peroxydiisopropyl)-benzene may be used as a synergist for the flame-retarding agent hexabromo-2-butene.

To combat collapse and shrinkage in the production of blocks from fine-particled expandable polystyrene of a composition modified to improve its flame resistance, use is made of a recipe featuring a synergist 1,3-bis-($\alpha$-tert.-butylperoxydiisopropyl)-benzene (TDB) and as flame-retarding agent hexabromocyclododecane. Use of TDB in an amount of at least 0.02 and at most 0.12 parts by weight per hundred parts of resin gives a cost saving in comparison with prior art use of di-cumyl peroxide at 0.2 parts per hundred of resin, despite the higher cost per unit weight of the TDB.

In one aspect, the invention concerns the use, as a synergist with hexabromocyclododecane in the making of particles of expandable polystyrene by a suspension polymerization process, of the compound 1,3-

bis-($\alpha$-tert.-butylperoxydiisopropyl)-benzene (TDB) instead of dicumyl peroxide (DCP) or the like. When such a substitution is made, even with the use of approximately 30 to 90% as much of the TDB as of DCP, results at least substantially equivalent, if not slightly superior, are obtained in respect to such factors as pressure-release time, fire retardance, and expansion rate, while superior results are obtained in respect to shrinkage or collapse of parts molded from the expandable polystryene so produced. In the block-molding industry, this avoidance of collapse and shrinkage is a very important consideration, directly influencing the raw-material cost in an industry which is raw-material-intensive.

A principal result of using such a peroxide is that it makes it possible, with the use of a relatively modest amount of hexabromocyclododecane such as 0.6%, to obtain a good flame retardance, as evidenced by a maximum value, in the vertical flammability test, of 2 seconds or less. When the relatively stable peroxide is omitted, this usually results in maximum values of 4 seconds or greater in such a test.

The vertical flammability test is conducted by taking from a molded block of the expanded polystyrene a piece having dimensions such as 12 inches (30.48cm) by 12 inches (30.48cm) by 1—1/2 inches (3.7cm) and then, after holding the piece at 70°C in air for 7 days, positioning the piece so that it extends generally vertically and with one of its bottom surfaces level, and applying to its bottom a Bunsen burner flame. The flame should be blue, with no yellow and no inner cone, about 75mm long and coming from an opening of about 12.5mm, and the flame must be brought to within 37mm of the piece and applied there for about 5 seconds, and then removed. A stop-watch is then used to determine the time that it takes the sample subjected to such treatment to become extinguished. Usually, when a few dozen pieces or samples are subjected to such a test, the average time to self-extinguishment is on the order of 0.5 to 0.8 second; the more revealing figure concerned with a test is the maximum value obtained, which should (in the case of commercially acceptable material) not be greater than 3 seconds and ideally not greater than 2 seconds.

Those skilled in the art are familiar with the practice whereby styrene or the like is suspended in an aqueous phase and polymerized with the use of a free-radical initiator, using also heat, as necessary or desired.

After beads are made and, if desired, coated with hydrophobic material, the next step, in the total process of converting styrene monomer and other ingredients to a finished article of expanded polystyrene, is the pre-expansion step. In this step, the beads of polystyrene are fed into a pre-expansion apparatus, where the beads are subjected to the action of steam to a controlled extent, to cause a substantial portion of the pentane or other blowing agent contained therein to become volatilized and to cause the softened polymer to be reduced in bulk density to some value on the order of 16 grams per liter, i.e, a value substantially closer to the density of the fully expanded polystyrene in its form in a finished article.

Thereafter, the expanded beads are aged and then fed into a mold. The system is sealed, and steam is introduced at a line pressure, such as 2.36 to 7.8 bar. The steam enters into a steam chest in which there is situated a pressure-sensitive gauge which will cut off the steam when the pressure in the chest rises to some preselected value of back pressure, such as 1.545 to 2.02 bar. Then, after the pressure in the chest drops to a suitably low value (about 1.07 bar, for example), the system is opened and the ejector members which are usually provided in the sides of the mold are activated to eject the finished block. The expression "pressure release time" (PRT) is the length of time in minutes between the closing of the steam supply and the reaching of the desired low pressure in the steam chest. It is desirable for the PRT to be as short as possible. In the making of large blocks having dimensions such as 4.9 meters by 2.45 meters by 0.508 meters, a pressure release time on the order of 1.5 to 15 minutes is usual.

In connection with the making of articles such as insulation board or the like, which may be made by producing a large block of expanded polystyrene which is aged and then hot-wire cut into slices, it is particularly important that the block which is initially molded not shrink or collapse any more than is necessary. The extent of collapse and shrinkage influences the amount of scrap which is produced in the hot-wire cutting operation and the number of complete slices which can be obtained from a given block. The terms "collapse" and "shrinkage" have been explained herein above. When the present invention is practiced, it is frequently possible to reduce the percentage of collapse to a value of about 1/2 or 1/3 of that observed when following the practices of the prior art.

Although the invention has been indicated above as being principally useful when the bromide-modified expandable polystyrene particles are relatively fine-particled (about 1.5mm in maximum dimension or less, preferably 1.0mm or less), the invention is also of use either when the particles are somewhat larger (up to about 5mm in maximum dimension). In this regard, attention is to be paid to the rather surprising effectiveness of the TDB when it is used at a low rate, such as 0.062 parts per hundred of resin, as compared to the prior-art practice of using 0.1—2.0 parts per hundred of resin of dicumyl peroxide. Although the TDB is higher in cost per unit of weight, the fact that it can be used so sparingly means that it is possible to realize a cost saving, in comparison with the prior-art practice of using dicumyl peroxide at the level of 0.2 parts per hundred of resin, and this advantage is obtained, whether the beads are particularly small or not.

In respect to the proportion of TDB to be used, 0.062 part per hundred of resin (phr.) appears to work about as well as 0.2 phr. of the DCP. Proportions as low as about 0.03 phr. or 0.02 phr. are operable. In general, it is desirable to keep the proportions used on the low side, not only from the standpoint of cost but also from the standpoint of tending to avoid collapse and/or shrinkage. In most instances, good results are to be obtained by using 0.06 to 0.12 phr.

The invention is not necessarily limited to the use of styrene as the monomer. In principle, the invention is equally applicable with other vinylaromatic compounds or mixtures of compounds, such as the materials mentioned in US - A - 3,058,929. It is common to use a monomer consisting principally of styrene, together with a small proportion, such as up to about 2%, of one or more compatible monoethylenically unsaturated monomers, such as acrylonitrile, alphamethylstyrene, dimethylaminoethylmethacrylate, etc.

Although it is most common to use pentane as a blowing agent, other materials may be used, such as another saturated aliphatic hydrocarbon containing from 4 to 7 carbon atoms in the molecule, or a perchloro-fluorocarbon, the compound preferably having a molecular weight of at least 58 and a boiling point no higher than 95°C. at 760mm of mercury absolute pressure and being a nonsolvent for the polymer. Examples of suitable substitutes for pentane includes isopentane, neopentane, n-butane, isobutane, hexane, heptane, petroleum ether, etc., or any of the various perchlorofluorocarbons mentioned in US - A - 3,058,929 Mixtures of any two or more such agents or compounds can also be used. Such materials are usually used at a rate equivalent, on a mole-for-mole basis, with the use of 5 to 8% by weight of pentane.

The proportion of hexabromocyclododecane to be used is related to the weight ratio of bromine to resin. Satisfactory results are generally obtained with a range of 0.01 to 2%.

It is also possible to practice the invention by making polystyrene beads of the desired size, but not containing any of one or more of (a) the organic peroxide, (b) the organic bromide, or (c) the blowing agent, and then to treat the particles so produced with a suitable medium so as to cause a desired proportion of the ingredients omitted to become diffused into the particles, so that particles having the desired composition are obtained. Extruded pellets of polystyrene can, for example, be used in such a practice.

As a suspending agent, there may be used polyvinylpyrrolidone, or other substances such as polyvinyl alcohol, hydroxyethyl cellulose, hydroxymethyl cellulose, etc., or another suitable organic suspending agent, or inorganic suspending agents, such as tricalcium phosphate or bentonite, etc., may be used.

The free-radical initiator(s) may be added in the aqueous phase, rather than in the monomer or organic phase.

The polymerization is usually conducted under conditions which yield a molecular weight corresponding to a K value on the order of 58 to 60, although K values as low as about 55 or as high as about 65 may be used in some circumstances. Those skilled in the art will understand how to select suitable conditions of time and temperature, taken together with such other adjustable parameters as the rate of agitation and the time of addition of suspending agent, in order to produce material of the desired particle size and degree of polymerization. In general, there is practiced an initial heating up, which may be done smoothly or stepwise, followed by another period, as long as 25 hours, of holding at an advanced temperature, on the general order of 80 to 115°C. Conditions may vary, depending upon the identity and concentration of the monomer and of the free-radical initiator selected. It is considered that the effect of the invention is independent, however, of the monomer, free-radical initiator, and polymerization conditions selected—that is to say, other things being equal, with beads of a given size, monomer, degree of polymerization, and volatiles content, and concentration of hexabromocyclododecane used, an improvement in collapse properties will be obtained when TDB is used, especially in relatively small quantities, and somewhat surprisingly, adequate flame-test results are obtained even when the TDB is used at very low concentrations.

Although in accordance with practices of the prior art, it was common to achieve values of 1.5 to 2.5% with respect to shrinkage and values of 6 to 12% with respect to collapse, with the system of the invention, it is usual to obtain values of 1.5% or less for shrinkage and 5% or less for collapse. Although in some cases greater values are encountered, the process of the invention usually significantly reduces the extent of collapse by about 30% and possibly by as much as 50% under otherwise identical molding conditions.

The invention indicated above is further illustrated by the following specific examples and comparison tests, in which parts are by weight unless otherwise indicated.

Test A

Expandable polystyrene was produced from a solution of 0.12 parts benzoyl peroxide, 0.26 parts t-butyl perbenzoate, 8 parts pentane, 0.64 parts hexabromocyclododecane, 0.2 parts DCP, and 6.7 parts polystyrene in 100 parts styrene which had been suspended, using vigorous stirring, in 100 parts water to which 1 part polyvinylpyrrolidone had been added. Polymerization was effected under a nitrogen atmosphere by heating such suspension to 80°C, raising the temperature over a five-hour period to 110 to 115°C, then reacting for five more hours at that temperature, and then cooling to 30°C.

Beads so made were expanded by being subjected to steam to yield expanded beads, which were thereafter molded into blocks of 2.44-meter length.

Results from this Test and from Examples according to the invention are presented in the following Table.

Example 1

Test A was repeated, except in place of DCP, 0.093 part TDB was used.

Example 2

Test A was repeated except that there was used 0.124 part TDB in place of the DCP, and the reaction mixture contained also 0.2 part of a Fischer-Tropsch wax.

Example 3

Example 2 was repeated, except that the polystyrene was excluded from the polymerization suspension.

Example 4

Example 2 was repeated, except that there was used 0.062 part TDB in place of the DCP.

Test B

Test A was repeated, except that the DCP was omitted.

Results from the above Tests and Examples appear in the following Table.

Table

| Test or Example | Shrinkage, % | | Collapse, % | |
|---|---|---|---|---|
| | 1.0×0.41mm | 2.0×1.0mm | 1.0×0.41mm | 2.0×1.0mm |
| A | 1.56 | 1.24 | 4.88 | 4.88 |
| | 1.96 | 1.56 | 7.41 | 4.88 |
| | 1.88 | 1.44 | 10.73 | 6.83 |
| 1 | 1.20 | 1.06 | 3.9 | 3.32 |
| | 1.18 | 1.40 | 5.85 | 6.25 |
| | 1.24 | | 7.81 | |
| 2 | 1.52 | 0.96 | 3.32 | 5.27 |
| | 1.37 | | 6.05 | |
| | 1.32 | | 8.98 | |
| 3 | 1.60 | 0.96 | 4.1 | 4.68 |
| | 1.70 | 1.38 | 7.22 | 5.66 |
| | 1.28 | | 9.17 | |
| 4 | 1.32 | 1.44 | 3.3 | 5.7 |
| | 1.44 | | 5.46 | |
| | 1.36 | | 8.4 | |
| B | 1.18 | 0.86 | 2.34 | 1.95 |
| | 1.32 | 1.06 | 3.90 | 4.29 |
| | 1.14 | | 5.85 | |

Table (Continued)

Vertical Extinguishment Time, sec.

| Test or Example | Ave. | Max. |
|---|---|---|
| A | 0.6 | 1.8 |
| 1 | 0.6 | 1.6 |
| 2 | 0.6 | 2.3 |
| 3 | 0.6 | 2.3 |
| 4 | 0.8 | 1.4 |
| B | | Not Determined |

In instances in which more than one value for percent of shrinkage or collapse is reported, the reported values are not for the same operating conditions, but rather for separate runs in which the molding operation was conducted with back-pressures of 0.64, 0.78 and 0.92 bar, or 0.64 and 0.78 bar, respectively. The data clearly show that the problem of collapse is more severe if a higher back-pressure is used. Test B shows that the problem of collapse is not so severe if the DCP is omitted. Such material gives unsatisfactory results in the vertical-flammability test, however. The particular material used to develop the cited figures for shrinkage and collapse was not tested, but similar material (Example 2 with the TDB omitted) gave an average of 1.2 seconds and a high of 6.7 seconds.

## Claims

1. Particles of expandable polystyrene containing an amount of hexabromocyclododecane effective to improve the flame-retardant properties and, as a synergist 1,3-bis-($\alpha$-tert.-butylperoxydiisopropyl)-benzene in an amount of at least 0.02 and at most 0.12 parts by weight per hundred parts of resin.

2. Particles of expandable polystyrene as defined in claim 1, characterized in that said hexabromocyclododecane is present in an amount of 0.01 to 2 per cent.

3. Particles of expandable polystyrene as defined in claim 1, characterized in that said 1,3-bis-($\alpha$-tert.-butyl-peroxydiisopropyl)-benzene is present in an amount of 0.062 parts by weight per hundred parts of resin.

## Patentansprüche

1. Teilchen aus expandierbarem Polystyrol, enthaltend Hexabromcyclododecan in einer Menge, die eine Verbesserung der Flammwidrigkeit bewirkt, und als Synergisten 1,3-Bis-($\alpha$-tert.-butylperoxydiisopropyl)-benzol in einer Menge von mindestens 0,02 und höchstens 0,12 Gewichtsteilen pro 100 Teile Harz.

2. Teilchen aus expandierbarem Polystyrol nach Anspruch 1, dadurch gekennzeichnet, daß das Hexabromcyclododecan in einer Menge von 0,01 bis 2% verwendet wird.

3. Teilchen aus expandierbarem Polystyrol nach Anspruch 1, dadurch gekennzeichnet, daß das 1,3-Bis-($\alpha$-tert.-butylperoxydiisopropyl)-benzol in einer Menge von 0,062 Gewichtsteilen pro 100 Teile Harz verwendet wird.

## Revendications

1. Particules de polystyrène expansible, contenant une proportion d'hexabromo-cyclododécane susceptible d'améliorer les propriétés ignifuges et, à titre d'agent de potentialisation, du 1,3-bis-($\alpha$-tertiobutyl-peroxy-diisopropyl)-benzéne en une proportion d'au moins 0,02 et d'au plus 0,12 partie en poids pour cent parties de résine.

2. Particules de polystyrène expansible telles que définies dans la revendication 1, caractérisées en ce que l'hexabromo-cyclododécane y est contenu en une proportion de 0,1 à 2%.

3. Particules de polystyrène expansible telles que définies dans la revendication 1, caractérisées en ce que le 1,3-bis-($\alpha$-tertiobutyl-peroxy-diisopropyl)-benzène y est contenu en une proportion de 0,062 partie en poids pour cent parties de résine.